# EUROPÄISCHE PATENTSCHRIFT

(11) **EP 0 911 740 B1**
(45) Veröffentlichungstag und Bekanntmachung des Hinweises auf die Patenterteilung: **04.03.2009**
(21) Anmeldenummer: 97122158.5
(22) Anmeldetag: 16.12.1997
(51) Int. Cl.: G06F 13/40

(54) **Busstation und Bussystem**
Bus station and bus system
Station de bus et système de bus

(30) Priorität: 06.10.1997 DE 19744099
(43) Veröffentlichungstag der Anmeldung: 28.04.1999
(73) Patentinhaber: ROBERT BOSCH GMBH, 70442 Stuttgart (DE)
(72) Erfinder: Seibold, Jochen, 72070 Tübingen (DE); Elbracht, Berthold, 72764 Reutlingen (DE); Schaedler, Peter, 71636 Ludwigsburg (DE)

(56) Entgegenhaltungen:
- EP-A- 0 498 646
- US-A- 5 081 440
- US-A- 5 550 463
- LUDWIG ZIDEK, MULLARD: 'The I2C Bus - A Small Area Network' NEW ELECTRONICS Bd. 16, Nr. 22, 01 Dezember 1983, INTERNATIONAL THOMSON PUBLISHING, LONDON, GB, Seiten 41 - 43, XP000808561

## Beschreibung

### Stand der Technik

Die Erfindung geht aus von einer Busstation bzw. einem Bussystem nach der Gattung der unabhängigen Patentansprüche. Es sind bereits Busstationen bekannt, die über die Busleitungen mit der notwendigen Betriebsenergie versorgt werden, die dann in einem Energiespeicher gespeichert wird. Weiterhin ist es bekannt Nachrichten durch fließende Ströme auszutauschen.

### Vorteile der Erfindung

Die erfindungsgemäße Busstation hat demgegenüber den Vorteil, daß ein Abfluß von Energie aus dem Energiespeicher gering gehalten werden kann. Der Energiespeicher kann somit klein ausgelegt werden, was neben einer Kostenreduzion des Bauteils selber auch eine schnellere Nachlademöglichkeit des Speichers über die Busleitungen ermöglicht. Das erfindungsgemäße Bussystem hat den Vorteil, daß Stromsignale, die sich hinsichtlich ihrer Stromrichtung unterscheiden besonders einfach ausgewertet werden können.

Durch die Maßnahmen der abhängigen Patentansprüche werden weitere vorteilhafte Weiterbildungen und Verbesserungen der technischen Lehre der unabhängigen Patentansprüche angegeben. Zweckmäßigerweise besteht der Speicher aus einem Kondensator der elektrisch zwischen der mindestens einen Busleitung und einem Masseanschluß angeordnet ist. Der Masseanschluß wird zur Verringerung eines Masseversatzes zweckmäßigerweise als zweite Busleitung ausgestaltet. Zum Nachweis der Signale auf den Busleitungen wird ein Widerstand und ein Komparator vorgesehen, wobei der Komparator einen Spannungsabfall am Widerstand nachweist. Durch die Verwendung eines zweiten Schalters können Stromsignale auf der mindestens einen Busleitung erzeugt werden. Durch eine in Reihe dazu geschaltete Stromquelle wird die Stärke des Stromsignals definiert eingestellt. Der erste und zweite Schalter wird so ausgebildet, daß nur einer von beiden zu jedem Zeitpunkt geöffnet sein kann. Durch diese Maßnahme wird ein Abfluß von Energie aus dem Speicher verhindert, wenn die Busstation selber Stromsignale auf den Leitungen erzeugt.

Aus US-5, 081, 440 ist eine Busstation bekannt, die einen Schalter für die Leistungs- und Informationsübertragung aufweist. Der Schalter koppelt die Information ein oder aus, getrennt von der Leistungsübertragung. Die Leistung wird in einen Leistungszweig übertragen. Die Busstation weist einen Kondensator auf, der als Energiespeicher für eine kurzzeitige Unterbrechung der Energieversorgung dient. Ludwig, Zidek, Mullard: "The 12C Bus - A Small Area Network" NEW ELECTRONICS, Bd. 16, Nr. 22, Dezember 1983 (19983-12), Seiten 41-43, London zeigt einen Multimasterbus, bei dem Busstationen über eine Busleitung verbunden sind. Nachrichten werden mittels Strömen, die auf der Busleitung fließen, ausgetauscht.

### Zeichnungen

Ausführungsbeispiele der Erfindung sind in den Zeichnungen dargestellt und in der nachfolgenden Beschreibung näher erläutert. Es zeigen die Figur 1 eine erste und zweite Busstation, Figur 2 den Spannungsabfall am Widerstand in der ersten Busstation, Figur 3 den Spannungsabfall am Widerstand der zweiten Busstation und Figur 4 die auf der Busleitung fließenden Ströme.

### Beschreibung

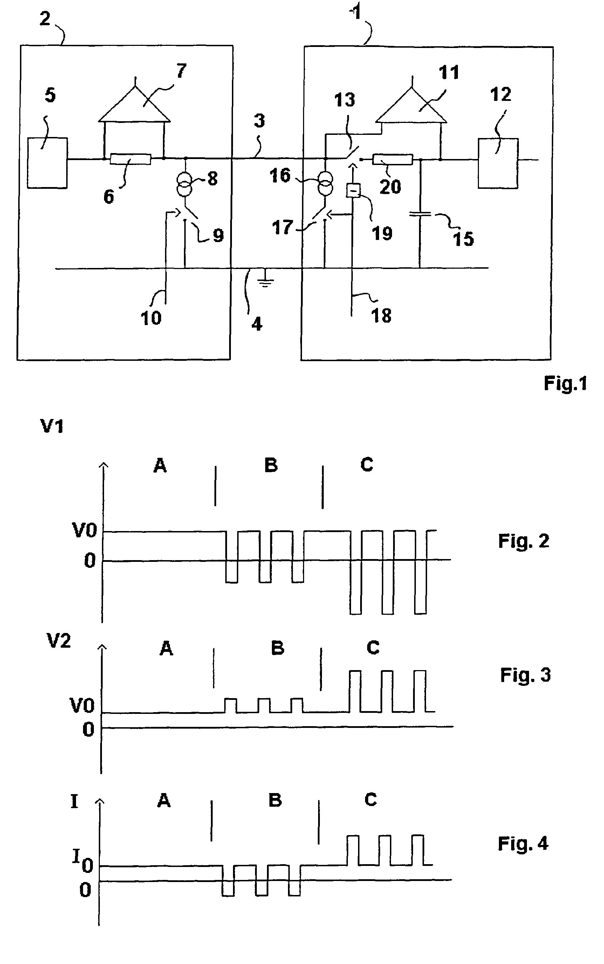

In der Figur 1 wird ein Bussystem mit einer ersten Busstation 1 und einer zweiten Busstation 2 gezeigt, die durch Busleitungen 3 und 4 miteinander verbunden sind. Die Busleitung 4 ist dabei mit Masse verbunden. Die Busstation 2 weist eine Spannungsquelle 5 auf, die mit einer hier nicht gezeigten externen Energieversorgung verbunden ist. Über einen Widerstand 6 ist die Spannungsquelle 5 mit der Busleitung 3 verbunden. Zu beiden Seiten des Widerstandes 6 sind Anschlüsse eines Komparators 7 angeordnet, durch den ein Spannungsabfall über den Widerstand 6 gemessen werden kann. In der Busstation 2 ist weiterhin ein Schalter 9 vorgesehen, der in Reihe mit einer Stomquelle 8 geschaltet ist. Bei geschlossenem Schalter 9 fließt somit innerhalb der Busstation 2 ein Strom zwischen der Busleitungen 3 und einem Masseanschluß, der durch die Busleitung 4 gebildet wird, dessen Betrag von der Stromquelle 8 abhängt. Entsprechend wird ein Stromfluß auf der Busleitung 3 verursacht. Zur Ansteuerung des Schalters 9 ist hier eine Ansteuerleitung 10 gezeigt, auf der von einer nicht dargestellten Steuerlogik ein Schaltsignal zum Schalten des Schalters 9 erzeugt wird. In der Busstation 1 ist ein Schalter 17 mit einer dazu in Reihe geschalteten Stromquelle 16 vorgesehen. Durch Schließen des Schalters 17 kann so in der Busstation 1 ein Stromfluß zwischen den Busleitungen 3 und dem Masseanschluß 4 erzeugt werden. Weiterhin ist die Busleitung 3 in der Busstation 1 mit einem Anschluß eines Schalters 13 verbunden. Ein anderer Anschluß des Schalters 13 ist mit einem Anschluß eines Widerstands 20 verbunden. Der andere Anschluß des Widerstandes 20 ist mit einem Spannungsregler 12 und einem Anschluß eines Kondensators 15 verbunden. Der andere Anschluß des Kondensators 15 ist mit dem Masseanschluß 4 verbunden. Weiterhin ist der weitere Anschluß des Widerstands 20 mit einem Eingang eines Komparators 11 verbunden. Der andere Eingang des Komparators 11 ist mit der Busleitung 3 verbunden. Weiterhin ist noch eine Schaltleitung 18 vorgesehen, auf der Signale zur Ansteuerung der Schalter 17 und 13 von einer nicht dargestellten Steuerlogik angelegt werden können. Durch einen Inwerter 19 wird dabei sichergestellt, daß die Schalter 13 und 17 jeweils mit entgegengesetzten Signalen angesteuert werden, d.h. wenn der Schalter 17 geschlossen ist, dann ist der Schalter 13 geöffnet und wenn der Schalter 17 geöffnet ist, ist der Schalter 13 geschlossen (Übergangszustände oder undefinierte Schaltzustände werden hier vernachlässigt).

Die beiden in der Figur 1 gezeigten Busstationen 1, 2 unterscheiden sich hinsichtlich ihrer Energieversorgung. Die Busstation 2 weist einen Spannungsregler 5 auf, der mit einer externen Energieversorgung, beispielsweise der Batterie eines Kraftfahrzeuges verbunden ist. Die Busstation 2 weist somit zusätzliche Leitungen auf, durch die die Energieversorgung sichergestellt wird. Davon unterscheidet sich die Busstation 1 dadurch, daß die Busstation 1 durch die Busleitungen 3, 4 mit der notwendigen Betriebsenergie versorgt wird. Die Busstation 1 weist somit keine weiteren nach außen führenden Leitungen auf, über die eine Energieversorgung erfolgt. Die Busstation 1 ist somit von der Busstation 2 bezüglich der Energieversorgung abhängig. Im folgenden wird daher die Busstation 2 als Zentralstation und die Busstation 1 als Peripheriestation 1 bezeichnet. Bei der Zentalstation 2 kann es sich beispielsweise um ein zentrales Gerät zur Auslösung eines Airbags handeln. Die Peripheriestation 1 kann dann beispielsweise in einem peripheren Beschleunigungssensor oder einem peripheren Element zur Auslösung eines Airbags bestehen.

Für die nachfolgende Beschreibung des Betrieb des Bussystems werden nun drei Betriebszustände unterschieden. Im einem ersten Betriebszustand, dem Ruhebetrieb, werden keine Nachrichten zwischen der Zentralstation und der Peripheriestation ausgetauscht (Betriebszustand A der Figuren 2 bis 4). In einem zweiten Betriebsmodus sendet das Zentralgerät 2 Nachrichten an die Peripheriestation 1 (Betriebszustand B der Figuren 2 bis 4). In einem dritten Betriebsmodus sendet das Peripheriegerät 1 Nachrichten an das Zentralgerät 2 (Betriebsmodus C der Figuren 2 bis 4).

### Ruhebetrieb

Im Ruhebetrieb ist der Schalter 9 des Zentralgeräts 2 und der Schalter 17 des Peripheriegerätes 1 geöffnet, so daß über diese Schalter keinerlei Stromfluß zwischen den Leitungen 3 und 4 erfolgt. Da der Schalter 17 geöffnet ist, ist der Schalter 13 geschlossen. Über den Spannungsregler 5 und den Widerstand 6 wird dann die Busleitung 3 mit einer Betriebsspannung beaufschlagt. Diese Betriebsspannung liegt dann über dem geschlossenen Schalter 13 und dem Widerstand 20 auch an dem Spannungsregler 12 der Peripheriestation 1 an. Der Spannungsregler 12 erzeugt aus der daran anliegenden Spannung eine Betriebsspannung für den Betrieb der Peripheriestation 1. Wenn die Peripheriestation beispielsweise als peripherer Beschleunigungssensor verwendet wird, so weist die Peripheriestation 1 zusätzlich noch einen Beschleunigungssensor, erste Auswerteschaltungen für das Sensorsignal und einen Mikrocontroller zur Verarbeitung der Sensorsignale und Bereitstellung entsprechender Informationen zur Übertragung über den Bus auf. Zum Betrieb dieser Komponenten ist ein bestimmter Stromfluß erforderlich, der dann auch über die Busleitungen 3 und 4 fließen muß. Durch den Stromfluß, der durch die Busleitung 3 fließt, entstehen am Widerstand 6 und am Widerstand 20 Spannungsabfälle, die durch Komperatoren 7 und 11 nachgewiesen werden. Dabei ist beispielsweise der nichtinvertierte Eingang des Komperators 7 zwischen dem Spannungsregler 5 und dem Widerstand 6 angeschlossen und der invertierte Eingang des Komperators 7 zwischen dem Widerstand 6 und der Busleitung 3. Die am Widerstand 6 abfallende Spannung V2 wird in der Figur 3 dargestellt. Diese Spannung, die in der Figur 3 mit V0 bezeichnet wird, ändert sich während der Ruhebetriebsphase A nicht. Ebenso fällt am Widerstand 20 eine Spannung V1 ab, die in der Figur 2 dargestellt wird. Der nichtinvertierte Eingang des Komparators 11 ist hier zwischen der Busleitung 3 und dem Widerstand 20 und der invertierte Eingang des Komparators 11 ist zwischen dem Widerstand 20 und dem Spannungsregler 12 angeschlossen. Auch hier ändert sich während des Ruhebetriebs A die Ruhespannung VO nicht, wobei die Ruhespannung VO die am Widerstand 20 abfällt nicht gleich sein muß, wie die Ruhespannung VO, die am Widerstand 6 abfällt. In der Figur 4 wird der Stromfluß I über die Busleitung 3 dargestellt, wobei in der Ruhebetriebsphase A ein Ruhestrom I0 fließt, der gerade der Stromaufnahme entspricht, die benötigt wird, um die Komponenten der Peripheriestation 1 zu betreiben. Während des Ruhebetriebs werden die Busleitungen somit nur dazu genutzt um die Peripheriestation mit der notwendigen Betriebsenergie zu versorgen.

Um eine Versorgung der Peripheriestation 1 auch während der Datenübertragung zu gewährleisten, weist die Peripheriestation 1 einen Kondensator 15 auf, der als Energiespeicher dient. Da der Kondensator 15 über den Widerstand 20 im gewissen Maße von den Spannungszuständen auf den Busleitungen abgekoppelt ist, wird durch den Kondensator 15 für eine gewisse Zeit auch dann noch ein Betrieb der Peripheriestation 1 ermöglicht, wenn die Busleitungen 3 und 4 miteinander kurzgeschlossen werden. Dem Kondensatoren 15 sind natürlich auch andere Energiespeicher, beispielsweise Spulen verwendbar. Die Beschreibung des Ruhebetriebs erfolgte hier unter der Annahme, daß der Kondensator 15 geladen ist, was natürlich bei einem erstmaligen Einschalten des Bussystems nicht der Fall ist.

Bei einem erstmaligen Einschalten erfolgen zunächst erhöhte Ströme bis der Energiespeicher, der durch den Kondensator 15 gebildet wird, aufgeladen ist.

Im folgenden wird nun die Sendung von Nachrichten von der Zentralstation 2 zur Peripheriestation 1 betrachtet (Betriebszustand B der Figuren 2 bis 4). Zur Aussendung von Nachrichten wird in der Zentralstation 2 durch entsprechende Schaltsignale auf der Schaltleitung 10 der Schalter 9 betätigt. Wenn der Schalter 9 geschlossen ist, so werden die Leitungen 3 und 4 miteinander elektrisch miteinander verbunden, wobei ein dabei fließender Strom durch die Stromquelle 8 begrenzt wird. Da bei dem Peripheriegerät 1 der Schalter 17 geöffnet und der Schalter 13 geschlossen ist, wird dieser Strom durch die Stromquelle 8 bzw. den Schalter 9 hindurch nicht nur vom Spannungsregler 5 sondern auch vom Energiespeicher 15 des Peripheriegeräts 1 zur Verfügung gestellt. Durch Schließen des Schalters 9 wird somit ein Stromfluß vom Kondensator 15 durch den Widerstand 20 hindurch zum Zentralgerät 2 bewirkt. Die am Widerstand 20 abfallende Spannung ändert somit im Verglich zum Ruhebetrieb ihr Vorzeichen. Dies wird in der Figur 2 für drei aufeinanderfolgende Betätigungen des Schalters 9 in der Betriebsphase B dargestellt. Wie zu erkennen ist, wird dabei bei jeder kurzen Betätigung des Schalters 9, die am Widerstand abfallende Spannung V1 vom positiven Bereich ausgehend von der positiven Ruhespannung V0 in den negativen Bereich gezogen. Eine derartige Änderung der am Widerstand 20 abfallende Spannung läßt sich so natürlich sehr einfach durch einen Komparator 11 nachweisen, dessen Schaltschwelle bei 0 Volt liegt. Es können aber auch entsprechend andere Schaltschwellen im leicht positiven oder leicht negativen Bereich verwendet werden, sofern dies aus irgendwelchen Gründen praktisch und sinnvoll ist. Auch die Betrachtung der auf der Leitung 3 fließenden Ströme in der Figur 4 zeigt für die Betriebsphase B einen Vorzeichenwechsel bei der Betätigung des Schalters 9. Während im Ruhebetrieb ein Stromfluß von dem Zentralgerät 2 zum Peripheriegerät 1 erfolgt, wird bei der Betätigung des Schalters 9 ein umgekehrter Stromfluß vom Peripheriegerät 1 zum Zentralgerät 2 hin verursacht. Die Darstellungen der Figuren 3 bis 4 gehen hier idealisierend davon aus, daß der Kondensator 15 ein sehr großes Speichervermögen aufweist, welches bei der kurzzeitigen Betätigung des Schalters 9 noch keine nenneswerte Verringerung der darin enthaltenen Energiemenge zeigt. Dies ist in der Realität natürlich nicht der Fall, so daß es sich bei den Figuren 2 bis 4 um idealisierte Betrachtungen handelt. Wie in der Figur 3 zu erkennen ist, wird durch das Betätigen des Schalters 9 auch ein erhöhter Stromfluß durch den Widerstand 6 verursacht, so daß sich auch dort die vom Komparator betrachtete Spannung V2 verändert. Diese werden natürlich von der Zentralstation 2 nicht als Signale berücksichtigt und werden entsprechend ausgeblendet.

Das Senden von Nachrichten von der Peripheriestation 1 zur Zentralstation 2 erfolgt indem die Peripheriestation 1 den Schalter 17 durch entsprechende Signale auf der Schaltleitung 18 schließt. Dabei wird dann gleichzeitig der Schalter 13 geöffnet, so daß der Kondensator 15 nicht mehr mit der Leitung 3 verbunden ist. Über den Schalter 17 fließt dann ein Strom zwischen der Busleitung 3 und der Busleitung 4 dessen Stärke durch die Stromquelle 16 definiert ist. Im folgenden wird davon ausgegangen, daß der durch die Stromquelle 16 definierte Strom größer ist als die Ruhestromaufnahme I0 der Peripheriestation 1, so daß über die Busleitung 3 ein erhöhter Strom fließt, wenn der Schalter 17 geschlossen wird. In der Figur 4 wird dargestellt, wie sich während dieser Betriebsphase C der Strom bei dreimaligem Betätigen des Schalters 17 erhöht.

Durch den durch die Peripheriestation 1 verursachten erhöhten Stromfluß auf der Busleitung 3 wird in der Zentralstation 2 der Stromfluß durch den Widerstand 6 ebenfalls erhöht, so daß sich der am Widerstand 6 abfallende Spannungsabfall V2 während der Betätigung des Schalters 17 ebenfalls erhöht. Dies wird in der Figur 3 dargestellt. Die Busstation 2 kann somit durch Auswertung des Spannungsabfalls V2 feststellen, wann der Schalter 17 in der Peripheriestation 1 geschlossen wurde. Dazu weist der Komparator 7 eine Schaltschwelle auf, die ein wenig höher ist als die im Ruhebetrieb am Widerstand 6 abfallende Spannung V0. Wesentlich ist hier, daß sich der Betriebsstrom in der Ruhephase IO von dem Strom unterscheidet, der durch die Stromquelle 16 definiert wird. In der Figur 4 wird gezeigt, daß die Stromaufnahme durch die Stromquelle 16 größer ist als der Ruhestrom IO, so daß der Strom auf der Busleitung 3 ansteigt. Dies bewirkt, wie in der Figur 3 dargestellt wird, eine Höhung der Spannung V2, die am Widerstand 6 abfällt. Durch den erhöhten Strom, der durch die Stromquelle 16 definiert wird, würde, sofern der Schalter 13 nicht vorgesehen ist, eine sehr schnelle Entladung des Kondensators 15 erfolgen, da dieser Kondensator ja während eines Schließens des Schalters 17 ohne die Abtrennung durch den Schalter 13 nicht nur den Betriebsstrom IO zur Verfügung stellen müßte, sondern zusätzlich noch einen Teil des Stroms durch die Stromquelle 16. Weiterhin würde dadurch natürlich auch das Stromsignal verringert, welches in der Zentalstation 2 nachweisbar ist. Durch die Abkopplung des Kondensators 15 während der Betätigung des Schalters 17 wird somit eine zu starke Entladung des Kondensators 15 vermieden. Durch die Verwendung des Entkoppelschalters 13 kann somit der Kondensator 15 kleiner und somit auch kostengünstiger ausgebildet werden. Dies ist besonders von Interesse, wenn die Nachrichten von der Zentalstation 2 zur Peripheriestation 1 hin besonders kurz sind und gleichzeitig die Nachrichten von der Peripheriestation 1 zur Zentralstation 2 hin deutlich länger sind. Bei der Verwendung zusammen mit einem zentralen Airbagauslösegerät (Zentralstation 2) und einem peripheren Beschleunigungssensor (Peripheriestation 1) könnte die kurze Nachricht des Zentralgeräts beispielsweise in einem alive-Signal bestehen, auf das dann das Peripheriegerät eine entsprechende Nachricht zurücksendet. Das alive-Signal könnte dabei beispielsweise aus einem einzelnen Bit bestehen, so daß der Kondensator 15, der die Energie für die Datenübertragung von der Zentralstation 2 zur Peripheriestation 1 hin zur Verfügung stellt, nur geringfügig entladen wird. Umgekehrt sendet die Peripheriestation einen konstanten Meßdatenstrom, der eine Vielzahl von Bits und somit auch eine Vielzahl von Betätigungen des Schalters 17 erfordert. Dieser Datenverkehr benötigt jedoch keine Energie aus dem Kondensator 15, da die dafür benötigte Energie ausschließlich von der Zentralstation 2 zur Verfügung gestellt wird. Die erfindungsgemäßen Peripheriestationen lassen sich daher besonders vorteilhaft anwenden, wenn der Datenverkehr von der Peripheriestation zur Zentralstation hin erheblich größer ist, als der Datenverkehr von der Zentralstation zur Peripheriestation. Wenn der Datenverkehr von der Zentralstation 2 zur Peripheriestation 1 hin eine spürbare Entladung des Kondensators 15 nur aufgrund des Leistungsverbrauchs der Peripheriestation bewirkt, müßte durch eine entsprechende Ansteuerung in der Zentralstation 2 sichergestellt werden, daß immer eine ausreichende Ladung des Kondensators 15 gewährleistet wird, indem zwischen den einzelnen Betätigungen des Schalters 9 ausreichende Ruhebetriebsphasen liegen.

Da zur Erzeugung eines Signals bei Betätigung des Schalters 17, der durch die Stromquelle 16 definierte Strom nur von dem Ruhebetriebsstrom I0 unterscheiden muß, wäre es natürlich auch möglich, den so definierten Strom kleiner zu machen als der Ruhebetriebsstrom I0. Dabei stände dann als maximaler Signalhub jedoch nur der Bereich von I0 bis zu keinem Stromfluß zur Verfügung. Da andererseits I0 möglichst klein sein sollte, d.h. die Ruhestromaufnahme des Peripheriegeräts sollte klein sein, damit der Spannungsregler 5 nicht zu aufwendig ausgestaltet werden muß und der Kondensator 15 möglichst klein sein soll, ist der so nutzbare Signalhub relativ klein. Es ist daher besser, wenn der Strom, der durch die Stromquelle 16 definiert ist, größer ist als der Ruhestrom I0, da so ein stärkeres Signal zur Verfügung stehen.

Da während der Betätigung des Schalters 17 der Kondensator 15 durch Öffnen des Schalters 13 entkoppelt ist, wird der von der Stromquelle 16 definierte Strom ausschließlich von dem Spannungsregler 5 zur Verfügung gestellt. Es läßt sich daher auch ein deutliches Signal erzielen, wenn sich der durch die Stromquelle 16 definierte Strom nur gering vom Ruhestrom I0 unterscheidet. Ohne die Entkopplung durch den Schalter 13 müßte die Stromquelle 16 zur Erzielung eines gleichstarken Signals in der Zentralstation 2 einen deutlich höheren Stromfluß definieren. Je geringer der durch die Stromquelle 16 definierter Strom ist, um so geringer ist natürlich auch die Verlustleistung im Peripheriegerät. Weiterhin ist der Ruhestrom I0 nicht wie in der idealisierten Darstellung der Figuren 2 bis 4 zeitlich gesehen konstant, sondern kann deutlich variieren. Durch die Entkopplung durch den Schalter 13 wird der auf der Leitung 3 fließende Strom unabhängig von diesen Variationen, da sich der Stromfluß durch die Stromquelle 16 genau definieren läßt.

Durch die Entkopplung durch den Schalter 13 wird der Kondensator 15 zeitweise von den Signalen auf der Busleitung 3 entkoppelt. Während des Sendebetriebs der Peripheriestation 1 erfolgt somit keine Entladung des Kondensators, so daß der Kondensator 15 nicht unnötig groß dimensioniert muß. Weiterhin werden so auch während dieser Betriebsphase die Eigangsspannungen des Spannungsreglers 12 nicht mit steilen Signalflanken beaufschlagt, so daß auch dieser Spannungsregler einfacher ausgelegt werden kann, bzw. die Betriebsspannung des Peripheriegeräts 1 geringeren Schwankungen unterliegt. Insbesondere können daher weitere Glättungkondensatoren klein gehalten werden oder ganz entfallen. Weiterhin kann der Widerstandswert des Widerstandes 20 relativ klein dimensioniert werden, so daß, insbesondere in Verbindung mit der geringeren Entladung des Kondensators 15, eine besonders schnelle Nachladung bei zugleich geringen Versorgungsspannungen erreicht wird.

Durch den geringeren Stromfluß der durch die Stromquelle 16 verursacht wird, werden natürlich auch die Abstrahlungen von elektromagnetischen Störungen verringert.

Wie in der Figur 2 in der Betriebsphase C zu erkennen ist, wird bei Schließen des Schalters 17 auch die am Widerstand 20 abfallende Spannung V1 beeinflußt. Diese Signal wird jedoch von der Peripheriestation ignoriert. Durch andere Anordnung der Eingänge des Komparators 11 relativ zum Schalter 13 und dem Widerstand 20 bzw. einer anderen Anordnung des Schalters 13 und des Widerstands 20 können auch andere Signalhübe während der Betätigung des Schalters 17 bzw. dem Öffnen des Schalters 13 am Komparator bewirkt werden. Beispielsweise könnte der Abgriff des Komparators in der Figur 1 nicht unmittelbar mit der Busleitung 3 verbunden sein, sondern ein Signal zwischen dem Schalter 13 und dem Widerstand 20 abgreifen. Die Spannung V1 würde dann bei Öffnen des Schalters 13 nicht in den negativen Bereich geraten, sondern allenfalls auf 0 zurückgehen. Weiterhin ist es beispielsweise auch möglich, daß im Vergleich zur Figur 1 die Anordnung des Widerstandes 20 und des Schalters 13 vertauscht werden.

Um sicherzustellen, daß der Schalter 13 und der Schalter 17 nicht gleichzeitig geöffnet oder geschlossen sein können, ist in den entsprechenden Schaltleitungen 18 an einer Stelle ein Inwerter 19 vorgesehen. Alternativ ist es auch möglich, daß dieser Inwerter in der Leitung für den Schalter 17 vorgesehen ist, oder daß die Schalter von ihrem Ansteuerverhalten so ausgelegt sind, daß bei gleichen anliegenden Signalen jeweils nur ein Schalter geöffnet sein kann.

Die Busleitung 4 kann auch weggelassen werden, sofern jede der Busstationen 1, 2 einen separaten Masseanschluß aufweist. Das Massepotential an solchen separaten Anschlüssen wird jedoch in der Regel größeren Schwankungen unterworfen sein.

Das hier beschriebene Bussystem kann natürlich auch mit mehr als zwei Busstationen Verwendung finden, bei der dann eine Zentralstation vorgesehen ist, die den Betriebsstrom für mehrere Peripheriestationen liefern. Dabei müssen dann natürlich noch die üblichen Maßnahmen getroffen werden, wie einen gleichzeitigen Zugriff auf die Busleitungen von mehreren Stationen zeitgleich verhindert. Eine einfache Maßnahme kann beispielsweise darin bestehen, daß nach einem Anregungssignal der Zentralstation die einzelnen Peripheriestationen nur zu vorgegebenen Zeitabständen versuchen selber Nachrichten auf die Busleitungen zu geben.

## Patentansprüche

1. Busstation (1) mit einem Speicher für elektrische Energie (15), wobei die in dem Speicher (15) gespeicherte elektrische Energie durch mindestens eine Busleitung (3) an die Busstation (1) heranführbar ist, wobei die Busstation zur Datenübertragung über die Busleitung (3) konfiguriert ist, **dadurch gekennzeichnet, dass** zwischen dem Speicher (15) und einem Anschluss für die mindestens eine Busleitung (3) ein erster Schalter (13) vorgesehen ist, und dass Mittel vorgesehen sind, die durch Öffnen des ersten Schalters bei bestimmten Betriebszuständen einen Rückfluss von elektrischer Energie aus dem Speicher (15) auf die mindestens eine Busleitung (3) verhindern und bei anderen Betriebszuständen einen Rückfluss von elektrischer Energie aus dem Speicher (15) auf die mindestens eine Busleitung (3) ermöglichen.

2. Busstation nach Anspruch 1, **dadurch gekennzeichnet, dass** der Speicher (15) als Kondensator ausgebildet ist, der zwischen dem Anschluss der Busleitung (3) und einem Masseanschluss (4) angeordnet ist.

3. Busstation nach Anspruch 2, **dadurch gekennzeichnet, dass** der Masseanschluss mit einer weiteren Busleitung (4) verbindbar ist.

4. Busstation nach einem der vorhergehenden Ansprüche, **dadurch gekennzeichnet, dass** in Reihe zum ersten Schalter (13) ein Widerstand (20) angeordnet ist, dass ein Komparator (11) vorgesehen ist, durch den ein Spannungsabfall an dem Widerstand (20) nachweisbar ist.

5. Busstation nach einem der vorhergehenden Ansprüche, **dadurch gekennzeichnet, dass** ein zweiter Schalter (17) vorgesehen ist, der so zwischen der ersten Busleitung (3) und dem Masseanschluss angeordnet ist, dass durch Schließen des zweiten Schalters (17) ein Stromfluss zwischen der mindestens einen Busleitung (3) und dem Masseanschluss (4) bewirkbar ist.

6. Busstation nach Anspruch 5, **dadurch gekennzeichnet, dass** in Reihe zum zweiten Schalter (17) eine Stromquelle (16) angeordnet ist, und dass durch die Stromquelle (16) bei geschlossenem Schalter (17) die Stärke des fließenden Stromes festgelegt ist.

7. Busstation nach Anspruch 5 oder 6, **dadurch gekennzeichnet, dass** der erste Schalter (13) und der zweite Schalter (17) so ausgebildet sind, dass bei geöffnetem ersten Schalter (13) der zweite Schalter (17) geschlossen ist und dass bei geöffnetem zweiten Schalter (17) der erste Schalter (13) geschlossen ist.

8. Busstation nach einem der vorhergehenden Ansprüche, **dadurch gekennzeichnet, dass** der Speicher (15) mit einem Spannungsregler (12) verbunden ist, der eine Betriebsspannung zur Versorgung der Busstation liefert.

9. Bussystem mit mindestens einer ersten und einer zweiten Busstation (1, 2), die durch mindestens eine Busleitung (3) miteinander verbunden sind, wobei Nachrichten zwischen den Stationen durch Ströme, die auf der mindestens einen Leitung (3) fließen, ausgetauscht werden, wobei die Stromrichtung davon abhängt, welche Busstation (1, 2) sendet, **dadurch gekennzeichnet,dass** die mindestens eine Busstationen (2) die durch die mindestens eine Busleitung (3) mit einem Betriebsstrom 10 versorgt wird einen Energiespeicher (15) und einen Schalter (13) aufweist, und dass durch wahlweises Öffnen und Schließen des Schalters (13) ein Rückfluss von Energie vom Energiespeicher (15) auf die Busleitung zugelassen oder verhindert wird.

10. Bussystem nach Anspruch 9, **dadurch gekennzeichnet, dass** mindestens eine der Busstationen (2) durch die mindestens eine Busleitung (3) mit einem Betriebsstrom 10 versorgt wird.

## Claims

1. Bus station (1) having a store for electrical energy (15), the electrical energy stored in the store (15) being able to be led to the bus station (1) by means of at least one bus line (3), the bus station being configured to transmit data using the bus line (3), **characterized in that** a first switch (13) is provided between the store (15) and a connection for the at least one bus line (3), and **in that** provision is made of means which prevent electrical energy from returning from the store (15) to the at least one bus line (3) in particular operating states by opening the first switch and allow electrical energy to return from the store (15) to the at least one bus line (3) in other operating states.

2. Bus station according to Claim 1, **characterized in that** the store (15) is in the form of a capacitor which is arranged between the connection for the bus line (3) and an earth connection (4).

3. Bus station according to Claim 2, **characterized in that** the earth connection can be connected to a further bus line (4).

4. Bus station according to one of the preceding claims, **characterized in that** a resistor (20) is arranged in series with the first switch (13), and **in that** provision is made of a comparator (11) which can be used to detect a voltage drop across the resistor (20) .

5. Bus station according to one of the preceding claims, **characterized in that** provision is made of a second switch (17) which is arranged between the first bus line (3) and the earth connection in such a manner that a flow of current can be effected between the at least one bus line (3) and the earth connection (4) by closing the second switch (17).

6. Bus station according to Claim 5, **characterized in that** a current source (16) is arranged in series with the second switch (17), and **in that** the intensity of the flowing current is determined by the current source (16) when the switch (17) is closed.

7. Bus station according to Claim 5 or 6, **characterized in that** the first switch (13) and the second switch (17) are designed in such a manner that the second switch (17) is closed when the first switch (13) is open and the first switch (13) is closed when the second switch (17) is open.

8. Bus station according to one of the preceding claims, **characterized in that** the store (15) is connected to a voltage regulator (12) which provides an operating voltage for supplying the bus station.

9. Bus system having at least one first bus station (1) and one second bus station (2) which are connected to one another by means of at least one bus line (3), messages being interchanged between the stations by means of currents which flow on the at least one line (3), the current direction depending on which bus station (1, 2) is transmitting, **characterized in that** the at least one bus station (2) which is supplied with an operating current 10 by the at least one bus line (3) has an energy store (15) and a switch (13), and **in that** energy is allowed to return from the energy store (15) to the bus line, or is prevented from doing so, by selectively opening and closing the switch (13).

10. Bus system according to Claim 9, **characterized in that** at least one of the bus stations (2) is supplied with an operating current I0 by the at least one bus line (3).

## Revendications

1. Station de bus (1) présentant un accumulateur d'énergie électrique (15), l'énergie électrique accumulée dans l'accumulateur (15) pouvant être amenée à la station de bus (1) par au moins un conducteur de bus (3), la station de bus étant configurée pour transmettre des données par le conducteur (3),
**caractérisée en ce que**
un premier commutateur (13) est prévu entre l'accumulateur (15) et une borne de raccordement du ou des conducteurs de bus (3) et
**en ce que** des moyens sont prévus pour, dans certains états de fonctionnement, empêcher par ouverture du premier commutateur un retour d'énergie électrique depuis l'accumulateur (15) vers le ou les conducteurs de bus (3) et,
dans d'autres états de fonctionnement, permettre un renvoi d'énergie électrique depuis l'accumulateur (15) vers le ou les conducteurs de bus (3).

2. Station de bus selon la revendication 1, **caractérisée en ce que** l'accumulateur (15) est configuré comme condensateur disposé entre la borne de raccordement du conducteur de bus (3) et une borne de raccordement à la masse (4).

3. Station de bus selon la revendication 2, **caractérisée en ce que** la borne de raccordement à la masse peut être reliée à un autre conducteur de bus (4).

4. Station de bus selon l'une des revendications précédentes, **caractérisée en ce qu'**une résistance (20) est disposée en série par rapport au premier commutateur (13) et **en ce qu'**elle présente un comparateur (11) par lequel la chute de tension aux bornes de la résistance (20) peut être détectée.

5. Station de bus selon l'une des revendications précédentes, **caractérisée en ce qu'**elle présente un deuxième commutateur (17) qui est disposé entre le premier conducteur de bus (3) et la borne de raccordement à la masse de telle sorte que la fermeture du deuxième commutateur (17) permette d'établir un écoulement de courant entre le ou les conducteurs de bus (3) et la borne de raccordement de masse (4).

6. Station de bus selon la revendication 5, **caractérisée en ce qu'**une source de courant (16) disposée en série par rapport au deuxième commutateur (17) et **en ce que** lorsque le commutateur (17) est fermé, la source de courant (16) définit l'intensité du courant qui s'écoule.

7. Station de bus selon les revendications 5 ou 6, **caractérisée en ce que** le premier commutateur (13) et le deuxième commutateur (17) sont configurés de telle sorte que lorsque le premier commutateur (13) est ouvert, le deuxième commutateur (17) est fermé et **en ce que** lorsque le deuxième commutateur (17) est ouvert, le premier commutateur (13) est fermé.

8. Station de bus selon l'une des revendications précédentes, **caractérisée en ce que** l'accumulateur (15) est relié à un régulateur de tension (12) qui délivre une tension d'alimentation qui alimente la station de bus.

9. Système de bus qui présente au moins une première et une deuxième station de bus (1, 2) reliées l'une à l'autre par au moins un conducteur de bus (3), des messages étant échangés entre les stations par les courants qui s'écoulent dans le ou les conducteurs (3), la direction du courant dépendant de la station de bus (1, 2) qui émet,
**caractérisé en ce que**
la ou les stations de bus (2) qui sont alimentées en courant de fonctionnement (10) par le ou les conducteurs de bus (3) présentent un accumulateur d'énergie (15) et un commutateur (13) et **en ce que** l'ouverture et la fermeture sélectives du commutateur (13) permettent ou empêchent un renvoi d'énergie depuis l'accumulateur d'énergie (15) vers le conducteur de bus.

10. Système de bus selon la revendication 9, **caractérisé en ce qu'**au moins l'une des stations de bus (2) est alimentée en courant de fonctionnement (10) par le ou les conducteurs de bus (3).
